Europäisches Patentamt

European Patent Office

Office européen des brevets

(11) Veröffentlichungsnummer : **0 044 938**
**B1**

(12) **EUROPÄISCHE PATENTSCHRIFT**

(45) Veröffentlichungstag der Patentschrift :
13.03.85

(21) Anmeldenummer : 81104701.8

(22) Anmeldetag : 19.06.81

(51) Int. Cl.⁴ : $C\ 08\ J\ \ 3/02,\ C\ 08\ K\ \ 5/05$

(54) **Wässrige Dispersionen von eingebaute ionische Gruppen enthaltenden Poly- oder Oligourethanen.**

(30) Priorität : 01.07.80 DE 3024880

(43) Veröffentlichungstag der Anmeldung :
03.02.82 Patentblatt 82/05

(45) Bekanntmachung des Hinweises auf die Patenterteilung : 13.03.85 Patentblatt 85/11

(84) Benannte Vertragsstaaten :
BE DE FR GB IT NL

(56) Entgegenhaltungen :
CH-A- 245 371
US-A- 3 347 814
US-A- 4 012 355
Die Akte enthält technische Angaben, die nach dem
Eingang der Anmeldung eingereicht wurden und die
nicht in dieser Patentschrift enthalten sind.

(73) Patentinhaber : BAYER AG
Konzernverwaltung RP Patentabteilung
D-5090 Leverkusen 1 Bayerwerk (DE)

(72) Erfinder : Wenzel, Wolfgang, Dr.
Peter-Landwehr-Strasse 13
D-5060 Bergisch Gladbach 2 (DE)
Erfinder : Mertens, Günter
Beringstrasse 2
D-5090 Leverkusen 3 (DE)

EP 0 044 938 B1

## Beschreibung

Wäßrige Dispersionen von Oligo- bzw. Polyurethanen werden in großen Mengen für Lackierungen, Beschichtungen und Verklebungen der verschiedensten flexiblen und nicht flexiblen Substrate verwendet.

Insbesondere beim Versand und der Lagerung der Dispersionen bei Außentemperaturen unterhalb ihres Gefrierpunkts müssen im allgemeinen besondere Vorkehrungen in Form von temperierten Fahrzeugen und temperierten Lagerhallen getroffen werden, um ein Einfrieren der Dispersionen zu verhindern.

Dies ist im allgemeinen erforderlich, da die wäßrigen Systeme nach dem Einfrieren nicht wieder zu einer brauchbaren Dispersion auftauen, sondern vielmehr nach dem Auftauen grobteilig und häufig sogar als homogene, gallertartige Masse vorliegen.

Zur Beseitigung dieses gravierenden Nachteils bietet sich selbstverständlich die Zugabe größerer Mengen sogenannter Gefrierschutzmittel an, wie sie in Kühlkreisläufen bei Verbrennungsmotoren verwandt werden und dort ein Einfrieren des Wassers verhindern. Dieses Verfahren führt aus verschiedenen Gründen zu so erheblichen Nachteilen, daß, bisher lieber auf jeglichen Gefrierschutz verzichtet wird. Verwendet man Niedrigsieder wie z. B. Methanol, Ethanol oder Isopropanol in den zum Gefrierschutz notwendigen Mengen (mehr als 15 %, in der Regel sogar mehr als 25 % der flüssigen Phase), so vergibt man die Vorteile eines wäßrigen Systems wie z. B. Nichtbrennberkeit, die damit verbundenen einfachen Lagermöglichkeiten, die Verarbeitung ohne Lösemittelbeeinträchtigung sowie den gegenüber Lösungsmittel niedrigeren Preis des Wassers. Verwendet man Hochsieder wie z. B. Mono- oder Diethylenglykol in den zum Gefrierschutz erforderlichen Mengen (mehr als 15 % in der Regel, mehr als 25 % der flüssigen Phase), so haben die Produkte neben den oben genannten noch folgenden gravierenden Nachteil : durch das hochsiedende Lösemittel bekommt man beim Applizieren bzw. dem nachfolgenden Wasserverdunsten schwerer eine trockene Oberfläche, da der nur schlecht verdunstende Hochsieder in den hohen vorliegenden Mengen als Weichmacher in der aufgebrachten Kunststoffschicht zurückbleibt.

Es war daher die Aufgabe der vorliegenden Erfindung, Zusatzmittel für wäßrige Dispersionen von eingebaute ionische Gruppen enthaltenden Poly- oder Oligourethanen aufzufinden, welche einerseits bewirken, daß die Dispersionen gefahrlos eingefroren werden können, d. h., daß sie nach dem Auftauen bezüglich ihrer anwendungstechnischen Eingenschaften praktisch unverändert sind, und welche andererseits den Dispersionen nur in so geringen Mengen zudosiert werden müssen, daß deren anwendungstechnischen Eigenschaften nicht nennenswert verschlechtert werden.

Diese Aufgabe konnte wie nachstehend dargelegt durch Zusatz äußerst geringer Mengen an Ethylenglykol zu den Dispersionen gelöst werden.

Gegenstand der Erfindung sind wäßrige Dispersionen von eingebaute ionische Gruppen enthaltenden Poly- oder Oligourethanen, gekennzeichnet durch einen Gehalt von 0,5 bis 2 Gew.-%, bezogen auf Dispersion, an Ethylenglykol.

Die erfindungsgemäßen Dispersionen sind froststabil. Hierunter ist das überraschende Phänomen zu verstehen, daß die Dispersionen bereits aufgrund des äußerst minimalen Zusatzes an Ethylenglykol ohne nennenswerte Beeinträchtigung ihrer anwendungstechnischen Eigenschaften eingefroren und wieder aufgetaut werden können.

In der, sich mit Polymerisatdispersionen befassenden US-PS 3 347 814 findet sich zwar ein Hinweis, daß u. a. Ethylenglykol oder Glycerin bereits zur Stabilisierung von wäßrigen Polymerisatdispersionen eingesetzt worden sind. Als nachteilhaft wird jedoch gleichzeitig herausgestellt, daß die so stabilisierten Dispersionen verlängerte Trocknungszeiten, eine verminderte Adhäsion der aus den Dispersionen gebildeten Filme an Substraten und eine erhöhte Wasserempfindlichkeit des resultierenden Films aufweisen. Hieraus kann geschlossen werden, daß die Stabilisierungsmittel in beträchtlichen, d. h. weit über 2 Gew.-% liegenden Mengen verwendet worden waren. Irgendein Hinweis auf die erfindungsgemäß aufgefundene überraschende Tatsache, daß wäßrige Dispersionen von eingebaute ionische Gruppen enthaltenden Poly- oder Oligourethanen bereits mit einem Zusatz von max. 2 Gew.-% an Ethylenglykol wirkungsvoll stabilisiert werden können, ist der Vorveröffentlichung nicht zu entnehmen.

Die US-PS 4 012 355 empfiehlt die Verwendung von Ethylenglykol in Mengen von 1 bis 10 Gew.-% (Ausführungsbeispiele : 5 bis 9,24 Gew.-%) in Polymerisatdispersionen, wobei das Zusatzmittel als Gefrierschutzmittel wirken soll, so daß die Dispersionen auch bei Temperaturen um den Gefrierpunkt verarbeitbar bleiben. Die erfindungsgemäß einzusetzenden äußerst geringen Mengen an Ethylenglykol können selbstverständlich keinen nennenswerten Gefrierschutz bewirken ; ein derartiger Gefrierschutz hat jedoch auch mit der oben definierten erfindungsgemäßen Aufgabe nichts zu tun. Selbstverständlich gefrieren die erfindungsgemäßen Dispersionen bei wenig unterhalb des Gefrierpunkts liegenden Temperaturen, sie sind jedoch, und dies ist der wesentliche Punkt, nach dem Auftauen im Gegensatz zu unstabilisierten Dispersionen ohne Beeinträchtigung ihrer Eigenschaften verarbeitbar. Die sich mit dem Gefrierschutz von Polymerisatdispersionen befassende US-PS 4 012 355 kann demzufolge auch keinerlei Hinweis auf die Froststabilisierung von wässrigen Dispersionen von eingebaute ionische Gruppen enthaltenden Poly- oder Oligourethanen vermitteln.

Die erfindungsgemäßen stabilisierten wäßrigen Dispersionen von Oligo- bzw. Polyurethanen sind solche beliebiger Art, wie sie beispielsweise in den US-PSen 3 479 310, 3 756 992, 4 108 814, 4 186 118, den DE-OSen 2 311 635, 2 637 690, 2 721 985, 2 725 589, 2 734 576, 2 811 148 oder 2 816 815 beschrieben sind. Die einzige Einschränkung ist darin zu sehen, daß die erfindungsgemäßen, stabilisierten Dispersionen keine in Wasser nicht dispergierbaren oder nicht löslichen Hilfs- und Zusatzmittel enthalten sollen.

Zur Herstellung der erfindungsgemäßen Dispersionen wird das Ethylenglykol wäßrigen Dispersionen von eingebaute ionische Gruppen enthaltenden Poly- oder Oligourethanen in einer Menge von 0,5 bis 2 Gew.-%, bezogen auf Dispersion, zugesetzt. Selbstverständlich ist es auch möglich, das Zusatzmittel vor der Fertigstellung der Dispersionen, d. h. zu jedem beliebigen Zeitpunkt während der Herstellung der Dispersionen zuzusetzen, vorausgesetzt, daß der Zusatz nicht mit den zum Aufbau der Kunststoffe bzw. Kunststoffvorläufer eingesetzten Reaktionskomponenten reagieren. So ist es beispielsweise nicht möglich, bei der Herstellung einer Polyurethandispersion Ethylenglykol zuzugeben, solange noch Isocyanatgruppen in der Reaktionsschmelze vorliegen. Eine Ausnahme hierzu liegt dann vor, wenn gleichzeitig mit den OH-Gruppen des Zusatzmittels andere schneller mit Isocyanatgruppen reagierende Substanzen, wie z. B. Amine, in dem Reaktionsgemisch vorliegen, oder wenn beabsichtigt ist, ein Teil des Zusatzmittels mit den Isocyanatgruppen zur Reaktion zu bringen.

Die erfindungsgemäßen stabilisierten Dispersionen können für alle beliebigen Anwendungsgebiete wäßriger Dispersionen von eingebaute ionische Gruppen enthaltenden Poly- oder Oligourethanen eingesetzt werden. Sie eignen sich insbesondere zur Lederzurichtung, ferner zur Textilbeschichtung, Vliesverfestigung, Imprägnierung beliebiger Substrate, als Klebstoff oder Beschichtungsmittel beliebiger Substrate, als Glasfaserschlichte oder zur Tauchkoagulation. Die erfindungsgemäßen stabilisierten Dispersionen können ohne Nachteil eingefroren und wieder aufgetaut werden, so daß sich diesbezügliche Vorsichtsmaßnahmen bei ihrem Transport und bei ihrer Lagerung unterhalb 0 °C weitgehend erübrigen.

Die in den nachfolgenden Beispielen erwähnten Prozentangaben beziehen sich auf Gewichtsprozente.

Beispiel

Ansatz :

9,66 kg eines auf Bisphenol-A gestarteten Polypropylenglykolethers (OHZ 197)

2,41 kg Phthalsäure-Adipinsäure-Ethylenglykol-Polyester (OHZ 64,1)
1,72 kg eines NaHSO$_3$-Adduktes an propoxyliertes Butendiol-1,4 (OHZ 261)
5,53 kg Hexamethylendiisocyanat
1,34 kg Harnstoff .
46,00 kg entsalztes Wasser
1,80 kg Formaldehyd (30 %ig in Wasser)

Durchführung :

Der Polyether, der Polyester und das Addukt werden im Vakuum bei 110 °C unter Rühren 30 Minuten entwässert. Anschließend wird auf 50 °C abgekühlt, das Diisocyanat zugegeben, auf 80 °C aufgeheizt und solange verrührt, bis ein NCO-Wert von 4,5 % erreicht ist. Es wird Harnstoff zugegeben und schnell auf 125 °C aufgeheizt und eine Stunde bei 125-130 °C verrührt. Dann wird auf 100 °C abgekühlt und mit 80 °C warmen Wasser dispergiert. Nach 3-stündigem Nachrühren wird Formaldehyd zugegeben, 2 Stunden bei 80 °C verrührt und anschließend auf Raumtemperatur abgekühlt. Die erhaltene feinteilige Dispersion hat bei einem Feststoffgehalt von 30,2 % eine Fordbecher-Auslaufzeit (4 mm Düse) von 13 Sekunden. Der pH-Wert beträgt 6. Diese Dispersion ist in der Lederzurichtung als Binder für die Effektfarbe brauchbar. Friert man diese Dispersion jedoch bei ca. − 20 °C ein, so erhält man nach dem Auftauen eine nicht mehr redispergierbare feste Gallertmasse. Bei Zusatz der von 1,5 Gew.-%, bezogen auf Dispersion, an Ethylenglykol zu der Dispersion wird eine modifizierte Dispersion erhalten, die ohne Änderung ihrer Eigenschaften durch Abkühlen auf mindestens 20 °C eingefroren und anschließend durch Erwärmen auf Raumtemperatur wieder aufgetaut werden kann.

## Anspruch

Wässrige Dispersionen von eingebaute ionische Gruppen enthaltenden Poly- oder Oligourethanen, gekennzeichnet durch einen Gehalt von 0,5 bis 2 Gew.-%, bezogen auf Dispersion, an Ethylenglykol.

## Claim

Aqueous dispersions of poly- or oligourethanes containing incorporated ionic groups, characterized by a content of from 0.5 to 2 % bei weight, based on dispersion, of ethylene glycol.

## Revendication

Dispersions aqueuses de poly- ou oligouréthannes contenant des groupes ioniques inclus, caractérisées par une teneur en éthylène-glycol de 0,5 à 2 % en poids, par rapport à la dispersion.